# EUROPÄISCHE PATENTANMELDUNG

(11) **EP 0 623 793 A1**
(43) Veröffentlichungstag der Anmeldung: **09.11.1994**
(21) Anmeldenummer: 94107125.0
(22) Anmeldetag: 06.05.1994
(51) Int. Cl.: F25D 13/06

(54) **Kühlschrank zum Behandeln von Lebensmitteln, besonders von Schokoladenmassen**

(30) Priorität: 06.05.1993 IT MI930910
(71) Anmelder: CARLE & MONTANARI S.p.A., I-20141 Milano (IT)
(72) Erfinder: Carle, Marco Giovanni, I-27020 Torre d'Isola (IT)
(74) Vertreter: Mayer, Hans Benno, Dipl.-Ing.

(57) **Zusammenfassung**

Kühlschrank zum Behandeln von Lebensmitteln, besonders von Schokolade, wobei der Kühlschrank aus mehreren modularen Baueinheiten besteht, mit einer ortsfest vorgesehenen Grundeinheit (1), die mit einer Zufördereinrichtung (2) sowie mit einer Abfördereinrichtung (3) für Giessformen (s) zusammenarbeitet, und über der Grundeinheit ein Behälter (4) vorgesehen ist, der von den Giessformen (s) in vertikalen Ebenen durchlaufen wird, wobei der Behälter (4) wenigstens auf einer Seite schachtartige Bauteile (6,7) aufweist, die Belüftungskanäle bilden und schwenkbar gegenüber dem Kühlschrank angeordnet sind, und dass die verschwenkbar angeordneten, schachtartigen Bauteile (6,7) mit einer Kühleinheit (9) verbindbar sind, die gegenüber dem Kühlschrank verschiebbar angeordnet ist.

## Beschreibung

Die vorstehende Erfindung betrifft einen Kuehlschrank zum Behandeln von Lebensmitteln, besonders zum Behandeln von Schokoladenmasse.

Es ist vom Stand der Technik her bekannt, dass besonders Schokoladenerzeugnisse durch Vergiessen der pastoesen Masse in die Giesshohlraeume von Giessformen erfolgt.

Es ist auch vom Stand der Technik her bekannt, dass das pastoese Erzeugnis nach dem Vergiessen im Inneren von besonders ausgebildeten Kuehlschraenken gekuehlt wird, um eine Verfestigung des Erzeugnisses zu erzielen, z. B fuer die Herstellung von Schokoladetafeln.

Zu diesem Zweck sind Kuehlschraenke bekannt geworden, denen die mit Schokoladenmasse gefuellten Giessformen zugefuehrt werden. Dies erfolgt unter Zuhilfenahme einer bekannten Transporteinrichtung.

Im Inneren des Kuehlschrankes werden die Giessformen turmartig gestapelt, um dann im Inneren des Kuehlschrankes eine nach oben gerichtete und im Anschluss daran eine nach unten gerichtete Bewegung durchzufuehren.

In der Vergangenheit bestanden die Kuehlschraenke aus einer geschlossenen, monolithischen Struktur, die im wesentlichen aus einem Rahmen bestand, der im Inneren des Kuehlschrankes die Hub- und Senkvorrichtungen fuer den Transport der Giessformen aufnahm. Des weiteren waren im Inneren des Gestells auch Kontrolleinrichtungen, Antriebsvorrichtungen und Steuerungen vorgesehen. All diese Einrichtungen stellten eine fest angeordnete Struktur dar. Der bekannten Kuehleinrichtung wurden die Giessformen unter Zuhilfenahme von Foerderbaendern oder Foerderketten zugefuehrt.

Ein Nachteil des bekannten Kuehlschrankes ist darin zu sehen, dass er praktisch aus einer kompakten und monolithisch ausgebildeten Baueinheit besteht und dass bei Inaugenscheinnahme oder bei Auftreten von Stoerungen an einer der Vorrichtungen, die im Inneren des Kuehlschrankes montiert sind, in der Vergangenheit die Notwendigkeit bestand, die gesamte Fertigungsstrasse anzuhalten, um im Anschluss daran die Moeglichkeit zu schaffen, Teile des Kuehlschrankes abzubauen. Diese Tatsache fuehrte zu einem erheblichen Verlust wertvoller Fertigungszeit.

Auch fuer Reinigungsvorgaenge der Kuehlaggregate, der Luftfilter sowie der Fuehrungsschaechte fuer die Kuehlluft war es bei den bekannten Kuehlschraenken stets erforderlich, den Betrieb der Fertigungsanlage zu unterbrechen, um ein Abbauen der defekten Baugruppen zu ermoeglichen, und um die notwendigen Arbeiten durchfuehren zu koennen.

Es ist daher Aufgabe der vorstehenden Erfindung, die Nachteile des Standes der Technik zu vermeiden und einen Kuehlschrank vorzuschlagen, der ein schnelles Eingreifen im Falle einer erforderlichen Reparatur erlaubt und der es ermoeglicht, Pruefvorgaenge oder Instandhaltungsarbeiten fuer die einzelnen Baugruppen des Kuehlschrankes einfach durchzufuehren, ohne dafuer aufwendige mechanische Montagen oder Demontagearbeiten durchfuehren zu muessen.

Erfindungsgemaess wird diese Aufgabe dadurch geloest, dass der Kuehlschrank aus mehreren modular aufgebauten Baueinheiten besteht, die ein ortsfest angeordnetes Grundgestell beinhalten, das mit einer Transporteinrichtung fuer das Zufuehren sowie mit einer Transporteinrichtung fuer das Abfuehren der Giessformen zusammenarbeitet, dass ueber dem Grundgestell ein Behaeltnis angeordnet ist, das von den Giessformen in vertikal angeordneten Ebenen durchlaufen wird, dass das Behaeltnis auf einer Seite schachtartige Bauteile aufnimmt, die Luftfuehrungskanaele bilden und diese Luftfuehrungskanaele schwenkbar gegenueber dem Behaeltnis des Kuehlschrankes angeordnet sind, und dass die schwenkbar angeordneten schachtartigen Bauteile mit einem Kuehlaggregat verbindbar sind, das gegenueber dem Behaeltnis des Kuehlschrankes verfahrbar ist.

Mit besonderem Vorteil ist der Kuehlschrank mit Wandteilen ausgeruestet, die als schwenkbare Tueren ausgebildet sind, um ein ungehindertes Vordringen in das Innere der Baugruppen zu ermoeglichen.

Der Erfindungsgegenstand wird nun genauer anhand eines Ausfuehrungsbeispiels beschrieben und in den beigefuegten Zeichnungen dargestellt. Es zeigen:
Fig. 1 schematisch und in perspektivischer Darstellung den erfindungsgemaessen Kuehlschrank,
Fig. 2 schematisch den Kuehlschrank gemaess Fig. 1, mit einem Kuehlaggregat und einer Belueftungsvorrichtung, die in das Kuehlaggregat eingebaut ist, und
Fig. 3 den Kuehlschrank in perspektivischer Ansicht und in Betriebslage.

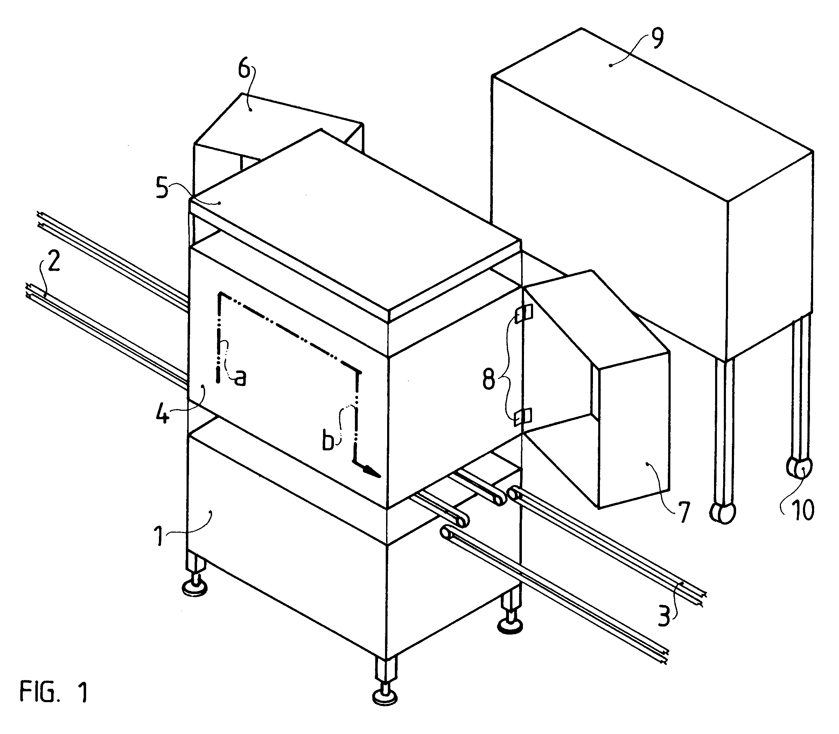

Wie der Fig. 1 zu entnehmen ist, besteht der Kuehlschrank aus einem Grundgestell, das gesamthaft mit 1 gekennzeichnet ist. Das Grundgestell 1 ist ortsfest angeordnet und arbeitet mit einem Foerderband 2 fuer das Zufuehren und einem Foerderband 3 fuer das Abfuehren von Giessformen zusammen.

Das Foerderband 2 sorgt fuer die Zufuehrung der Giessformen, auf deren Inhalt (Schokoladenmasse) thermisch im Kuehlschrank einzuwirken ist. Das Band 3 sorgt fuer den Abtransport der Giessformen.

Auf dem Grundgestell 1 ist ein Kuehlschrank 4 angeordnet, der die Form eines Behaelters aufweist, dessen Innenraum von den Giessformen, die durch die Transporteinrichtung 2 zugefuehrt werden, durchlaufen wird. Die Giessformen durchlaufen mit einer nach oben gerichteten Bewegung (a) und mit einer nach unten gerichteten Bewegung (b) den Kuehlschrank.

An der Oberseite ist das Behaeltnis des Kuehlschrankes 4 mittels eines abnehmbaren Deckels 5 verschlossen.

An mindestens einer Seite nimmt der Kuehlschrank 4 zwei schachtartige Bauteile 6 und 7 auf, die Luftfuehrungskanaele begrenzen. Die Schaechte 6 und 7 sind mit dem Gehaeuse des Kuehlschrankes 4 unter Zuhilfenahme von Scharnieren 8 verbunden. Dies erlaubt, die Schaechte 6 und 7 ungehindert gegenueber dem Gehaeuse des Kuehlschrankes 4 zu verschwenken.

Vor der Seite des Kuehlschrankes, die die Luftfuehrungsschaechte 6 und 7 aufnimmt, ist ein Luefter 9 angeordnet sowie ein Kuehlaggregat, Einrichtungen, die in vorteilhafter Weise, dank der Vorsehung von Laufrollen 10, eine Verschiebebewegung und eine freie oertliche Anordnung gegenueber dem Kuehlschrank 1, 4 erlauben.

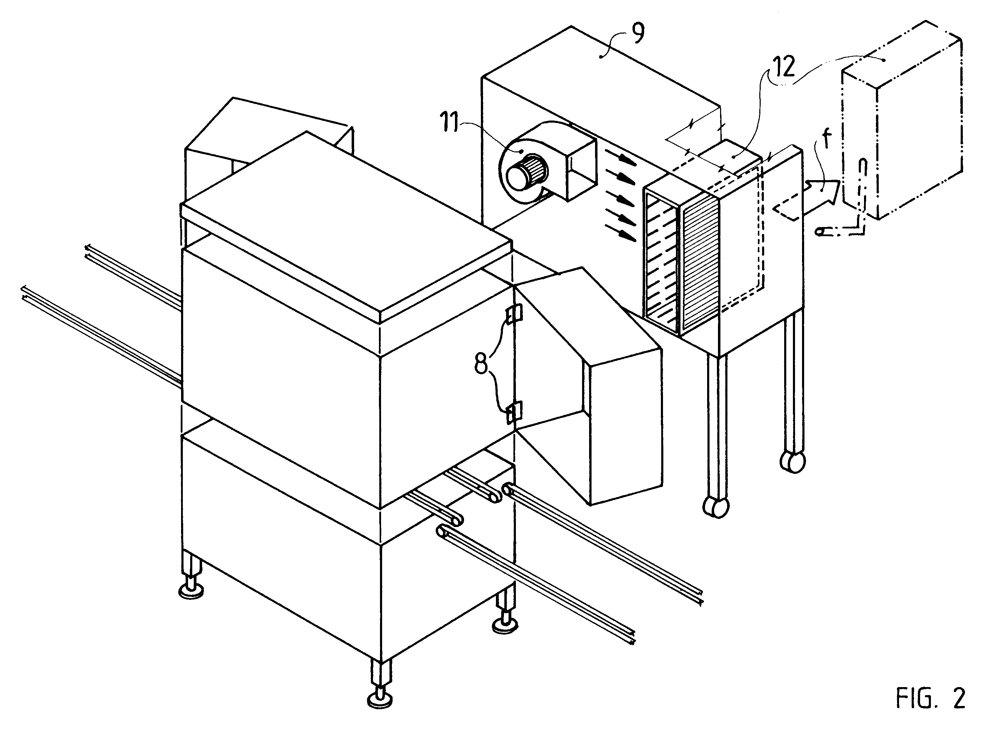

Der Fig. 2 kann entommen werden, dass das Luefteraggregat 9 sowie das Kuehlaggregat einen Ventilator 11 sowie ein oder mehrere Kuehlaggregate 12 aufnimmt. Die Kuehlaggregate 12 koennen in einfacher Weise aus der Baueinheit 9 ausgefahren werden, wie dies mit den Pfeilen f in Fig. 2 verdeutlicht ist. In vorteilhafter Weise weist die Baugruppe 9 eine elastische Verbindungsleitung sowie einen Schnellverschluss zum einfachen Anschliessen der Kuehlmittelleitung auf. Dies ermoeglicht es, das Kuehlaggregat 12 rasch mit einem anderen Kuehlaggregat auszutauschen, ferner ist es moeglich, das ausgefahrene Kuehlaggregat 12 Reinigungsarbeiten oder einem Desinfektionsvorgang ausserhalb der Kuehleinrichtung 9 zu unterziehen.

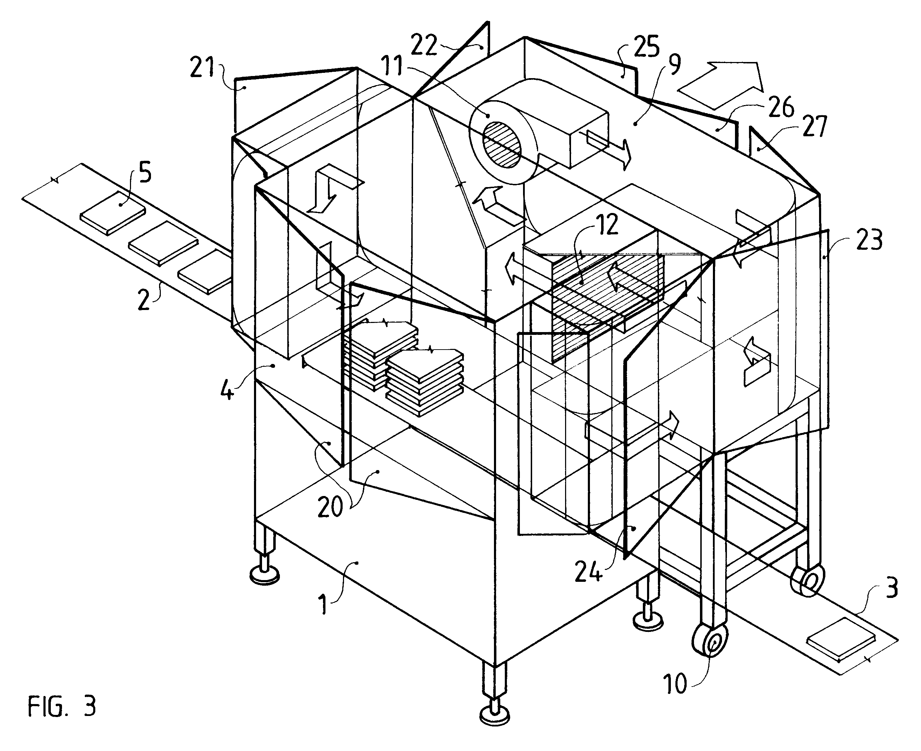

Der Fig. 3 kann in einer perspektivischen, schematischen Darstellung die Lageanordnung des Grundgestelles 1 gegenueber dem Band 2 fuer die Beschickung der Giessformen (S) sowie gegenueber dem Band 3 fuer das Abfuehren der Giessformen entnommen werden. Ueber dem Grundgestell 1 ist das Behaeltnis des mit 4 gekennzeichneten Kuehlschrankes angeordnet.

Der Kuehlschrank weist an seinen Umfangsseiten Tueren 20, 21, 22, 23 und 24 auf, die schwenkbar ausgebildet sind. Auch das Kuehlaggregat 9, das den Ventilator 11 sowie die Kuehleinrichtung 12 aufnimmt, weist verschwenkbare Tueren 25, 26 und 27 auf. Somit ist der Kuehlschrank 4 als auch die Lueftereinheit sowie das Kuehlaggregat 9 von allen Seiten frei zugaenglich. Es ist nicht erforderlich, zu diesem Zweck Wandtteile oder Luftfuehrungskanaele zu demontieren.

Da die Kuehleinrichtung 9 Fahrrollen 10 aufweist, kann diese Kuehleinrichtung vom Kuehlschrank 4 entfernt bzw. an diesen herangefahren werden.

Schliesslich besteht die Moeglichkeit, das Kuehlaggregat 12 rasch aus der Kuehleinrichtung 9 auszufahren.

Saemtliche Baueinheiten 1, 4, 6, 7 und 9 sind modulartig aufgebaut und weisen Abmessungen auf, die ein Kombinieren unter diesen Baugruppen ermoeglicht.

Der Kuehlschrank 4 ist mit den schachtartigen Bauteilen 6 und 7, die Luftfuehrungskanaele bilden, kombinierbar und diese Luftfuehrungskanaele sowie der Kuehlschrank 4 sind wiederum kombinierbar mit einem Kuehlaggregat, das verfahrbar ausgebildet ist.

Es besteht somit die Moeglichkeit, eine Kuehleinrichtung, besonders eine Einrichtung zum Kuehlen von in Giessformen eingebrachten Lebensmitteln zu schaffen, die einfach von allen Seiten der Einrichtung eingesehen werden kann und zugaenglich ist. Ferner koennen die Luftfuehrungsschaechte 6, 7 auf der rechten oder der linken Seite des Kuehlschrankes angeordnet werden; dadurch kann der Kuehlschrank 4 auf seiner rechten oder aber auf seiner linken Seite mit der Luftzufuehrungs- und Kuehleinrichtung 9 ausgeruestet werden.

## Patentansprüche

1. Kuehlschrank, zum Behandeln von Lebensmitteln, besonders von Schokoladenmasse, die in Giessformen eingefuellt ist, **dadurch gekennzeichnet**, dass der Kuehlschrank aus mehreren modular ausgebildeten Baueinheiten (1, 4, 5, 6, 7, 9) besteht, die ein ortsfest angeordnetes Grundgestell (1) beinhalten, das mit einer Transporteinrichtung (2) fuer das Zufuehren sowie mit einer Transporteinrichtung (3) fuer das Abfuehren der Giessformen zusammenarbeitet, dass ueber dem Grundgestell (1) ein Behaeltnis (4) angeordnet ist, das von den Giessformen in vertikal angeordneten Ebenen (a, b) durchlaufen wird, dass das Behaeltnis (4) auf einer Seite schachtartige Bauteile (6, 7) aufnimmt, die Luftfuehrungskanaele bilden und diese Luftfuehrungskanaele schwenkbar (8) gegenueber dem Behaeltnis des Kuehlschrankes (4) angeordnet sind und dass die schwenkbar angeordneten schachtartigen Bauteile (6, 7) mit einem Kuehlaggregat (9) verbindbar sind, das gegenueber dem Behaeltnis des Kuehlschrankes verfahrbar ist.

2. Kuehlschrank, nach Patentanspruch 1, **dadurch gekennzeichnet****,** dass die Waende (20, 21), die den Kuehlschrank (4) begrenzen, als schwenkbare Tueren (20, 21, 24) ausgebildet sind.

3. Kuehlschrank, nach Patentanspruch 1, **dadurch gekennzeichnet**, dass eine Seite des den Kuehlschrank (4) bildenden Behaeltnisses mit zwei schachtartigen Bauteilen (6, 7) ausgeruestet ist, die Luftfuehrungskanaele bilden, und dass die schachtartigen Bauteile verschwenkbar ueber Scharniere (8) mit dem Gehaeuse des Kuehlschrankes verbunden sind.

4. Kuehlschrank, nach Patentanspruch 1, **dadurch gekennzeichnet**, dass der Behaelter (9) einen Luefter (11) sowie ein Kuehlaggregat (12) aufnimmt.

5. Kuehlschrank, nach Patentanspruch 1, **dadurch gekennzeichnet****,** dass der Behaelter (9), der den Luefter (11) und das Kuehlaggregat (12) aufnimmt, mit Laufrollen (10) ausgeruestet ist.

6. Kuehlschrank, nach Patentanspruch 5, **dadurch gekennzeichnet**, dass das Kuehlaggregat (12) aus dem Behaelter (9) ausziehbar ist und mit einer Kuehlmittelquelle ueber eine flexible Leitung und eine Schnellkupplung anschliessbar ist.

7. Kuehlschrank, nach Patentanspruch 1, **dadurch gekennzeichnet**, dass die Umfangswaende des Behaelters (9) aus verschwenkbar gelagerten Tueren (25, 26, 27) bestehen.
